# FASCICULE DE BREVET EUROPEEN

(11) **EP 0 829 831 B1**
(45) Date de publication et mention de la délivrance du brevet: **04.07.2001**
(21) Numéro de dépôt: 97401875.6
(22) Date de dépôt: 04.08.1997
(51) Int. Cl.: G07F 7/10

(54) **Méthode d'authentification de cartes**
Verfahren zum Authentifizieren von Karten
Card authentication method

(30) Priorité: 13.09.1996 FR 9611211
(43) Date de publication de la demande: 18.03.1998
(73) Titulaire: Schlumberger Industries S.A., 92542 Montrouge Cedex (FR); Groupement d'Intérêt Public "Carte de Professionnel de Santé", 75009 Paris (FR)
(72) Inventeur: Isphording, Willem, 75009 Paris (FR)
(74) Mandataire: Hawkes, David John

(56) Documents cités:
- EP-A- 0 028 965
- EP-A- 0 029 894
- EP-A- 0 486 960
- EP-A- 0 661 675
- EP-A- 0 707 290
- FR-A- 2 680 258

## Description

La présente invention a pour objet une méthode d'authentification pour un terminal apte à gérer des échanges de données entre au moins deux cartes à puce et comprenant un coupleur monofente.

Pour assurer un bon niveau de sécurité dans les transactions avec une ou plusieurs cartes à puce, une étape de vérification ou d'authentification est habituellement effectuée. Par exemple, dans le cas d'une carte à puce encodée avec des informations sensibles ou secrètes qui est insérée dans le lecteur de cartes, la carte doit effectuer une authentification du lecteur avant d'autoriser la lecture ou l'écriture des données portées par la carte. A cette fin, la carte pourra être équipée d'un système de cryptage comprenant un algorithme cryptographique et un jeu de clés. La valeur de chacune de ces clés est secrète et n'est pas accessible en lisant la carte. Un terminal qui est autorisé à lire la carte sera également équipé d'un algorithme cryptographique et une ou plusieurs clés. Des systèmes de cryptage aptes à être utilisés dans ce domaine sont bien connus et peuvent fonctionner selon un mode symétrique (clé secrète) ou asymétrique (clé publique).

Lors de l'insertion de la carte dans le terminal, la carte génère un nombre aléatoire R_{N}. Ce nombre est à la fois envoyé au système d'exploitation du terminal et stocké dans la mémoire vive (RAM) de la carte. Le système d'exploitation reçoit le nombre et élabore un code d'authentification C, dont la valeur est déterminée par l'algorithme cryptographique dépendant de la valeur du nombre aléatoire R_{N} et de la valeur d'une clé in dans la carte. Le code d'authentification C est alors envoyé, avec le nombre d'identification de la clé iₙ, à la carte.

Dans la phase d'authentification, la carte calcule un code d'authentification C' dépendant de la valeur du nombre aléatoire R_{N} tenu dans la mémoire vive ainsi que la valeur de la clé iₙ identifiée par le terminal pour l'utilisation dans ce calcul. La carte compare le code C' avec le code C envoyé par le terminal et, dépendant du résultat de la comparaison, autorise ou rejette la lecture ou l'écriture de fichiers par le terminal.

Dans certains domaines, le terminal n'est pas capable de générer les codes d'authentification nécessaires pour lire les données de la carte sans la présence d'une deuxième carte. Par exemple, dans le domaine de la santé, les données stockées dans la carte d'un patient ne peuvent être lues qu'avec une carte appartenant à un médecin ou autre professionnel de santé.

Dans ces systèmes, l'authentification entre les cartes se fait grâce à un lecteur bi-fente apte à recevoir et à mettre sous tension les deux cartes au même moment. La première carte génère un nombre aléatoire R_{N}, qui est envoyé par le système d'exploitation du terminal à la deuxième carte. Celle-la génère un code d'authentification C qui est envoyé à la première carte. La première carte retire le nombre aléatoire R_{N} de sa mémoire vive et génère un code d'authentification C' pour faire une comparaison avec le code C envoyé par la deuxième carte et pour autoriser ou rejeter la lecture de données.

Pour maintenir les deux cartes sous tension pendant ces étapes un lecteur de cartes bi-fente, capable de lire deux cartes simultanément, est nécessaire. Sinon, deux lecteurs de cartes en parallèle doivent être mis à la disposition du système. L'utilisation d'un lecteur de cartes bi-fente ou la fourniture d'un deuxième lecteur de cartes augmente le prix et la complexité du système.

Document EP-A-0661675 décrit une méthode d'accés à une carte "patient" à l'aide d'une carte "superviseur" dans laquelle est stockée un code secret X sup qui sera comparé à un code secret X sup' contenu dans la carte "patient".

Par contre, avec un système ayant un seul lecteur monofente n'acceptant qu'une seule carte, si la première carte est retirée (pour permettre l'insertion de la deuxième carte), le nombre aléatoire stocké dans la mémoire vive sera immédiatement perdu dès que la carte n'est plus sous tension, et l'authentification ne pourra se faire.

D'autres solutions, dans lesquelles le nombre aléatoire est généré par la deuxième carte et envoyé avec le code d'authentification pour vérification par la première carte, évitent ce problème mais ne permettent pas un dialogue entre les deux cartes et diminuent la sécurité du système. Bien que l'envoi d'un nombre avec le code correspondant devrait signifier la possession par la deuxième carte du bon algorithme, il peut y avoir un système de fraude dans lequel le même numéro de code est envoyé plusieurs fois avec un nombre "aléatoire" qui change chaque fois ou, inversement, un nombre aléatoire d'une valeur fixée et un numéro de code qui change. Après quelques essais, le système arrivera à trouver la relation correcte entre les deux.

Un des objets de l'invention est ainsi de fournir un système apte à gérer un échange de données entre deux cartes et qui peut fonctionner avec un seul coupleur monofente sans les problèmes de sécurité décrits ci-dessus.

Pour atteindre ce but, la présente invention comprend une méthode d'authentification dans laquelle : la première carte est insérée dans le coupleur et génère un nombre aléatoire R_{N} qui est à la fois envoyé au système d'exploitation du terminal et stocké dans une mémoire non-volatile programmable de la carte; la première carte est retirée et une deuxième carte insérée pour recevoir le nombre aléatoire R_{N} et pour générer un code d'authentification C qui est envoyé au système d'exploitation du terminal; la deuxième carte est retirée et la première carte réinsérée, le nombre aléatoire étant réactivé dans la mémoire non-volatile et la première carte élaborant à partir de ce numéro un code d'authentification C' pour vérifier le code d'authentification C envoyé par la deuxième carte pour permettre ou empêcher l'accès par le système aux données stockées dans la carte.

Par ces moyens, l'invention préserve un dialogue d'authentification entre les deux cartes, la génération du nombre aléatoire étant sous contrôle de la première carte, sans l'obligation d'utiliser un lecteur bi-fente ou deux lecteurs en parallèle. Grâce à la mémoire non-volatile le nombre aléatoire peut être retenu par la première carte même lorsque la carte est retirée du lecteur et n'est plus sous tension.

Une mémoire non-volatile électriquement effacable (EEPROM) peut être incorporée dans le circuit intégré de la première carte pour servir comme mémoire non-volatile.

Pour assurer l'authentification mutuelle entre les deux cartes, le système d'exploitation peut exiger l'identification de la première carte avant de commencer l'échange de données. Dans ce cas, lors de la première insertion de la première carte et en réponse à une instruction du système d'exploitation, la carte envoie un numéro d'identification au système d'exploitation pour que le système puisse vérifier l'identité de la première carte.

Dans un mode de réalisation, l'élaboration des codes d'authentification C, C' par chacune des cartes peut s'effectuer en utilisant un algorithme cryptographique qui calcule le code d'authentification dépendant de la valeur du nombre aléatoire et la valeur d'une ou plusieurs clés cryptographiques connues par chacune des cartes.

Bien que la valeur de la clé reste secrète, le numéro d'identification de la clé utilisée dans le cryptage peut être librement communiqué dans le système. Par exemple, dans un mode de réalisation, le système d'exploitation peut choisir la clé qui est utilisée dans l'élaboration des codes d'authentification C, C' et communique cette information à chacune des cartes. Dans un autre mode de réalisation la première ou la deuxième carte peut choisir la clé qui est utilisée dans les étapes d'élaboration des codes d'authentification, cette information étant communiquée au système d'exploitation et à l'autre carte.

Pour assurer davantage de sécurité au système, le nombre aléatoire R_{N} est effacé de la mémoire non-volatile après avoir été utilisé dans l'élaboration du code d'authentification C' par la première carte.

Dans un mode de réalisation, le nombre aléatoire peut être retransmis à la première carte par le système d'exploitation à l'instant de l'envoi du code d'authentification C élaboré par la deuxième carte, pour que la première carte puisse le comparer avec celui tenu dans sa mémoire non-volatile afin d'effectuer une authentification supplémentaire. Dans le cas où il n'y a pas de correspondance entre les deux, le processus d'autorisation peut être arrêté même avant le calcul du code d'authentification C' par la première carte. Ce mode de réalisation renforce la sécurité du système et exclut la possibilité pour une personne non-autorisée de surveiller les opérations de calcul du code d'authentification.

D'autres caractéristiques et avantages de la présente invention apparaîtront mieux à la lecture de la description qui suit de plusieurs modes de réalisation de l'invention donnés à titre d'exemples non limitatifs. La description se réfère aux figures annexées sur lesquelles :
- La figure 1 montre le transfert des données à l'instant de l'insertion de la première carte;
- La figure 2 montre le transfert de données entre l'application ou le système d'exploitation du terminal et la deuxième carte;
- La figure 3 montre le transfert de données entre la deuxième carte et le système d'exploitation;

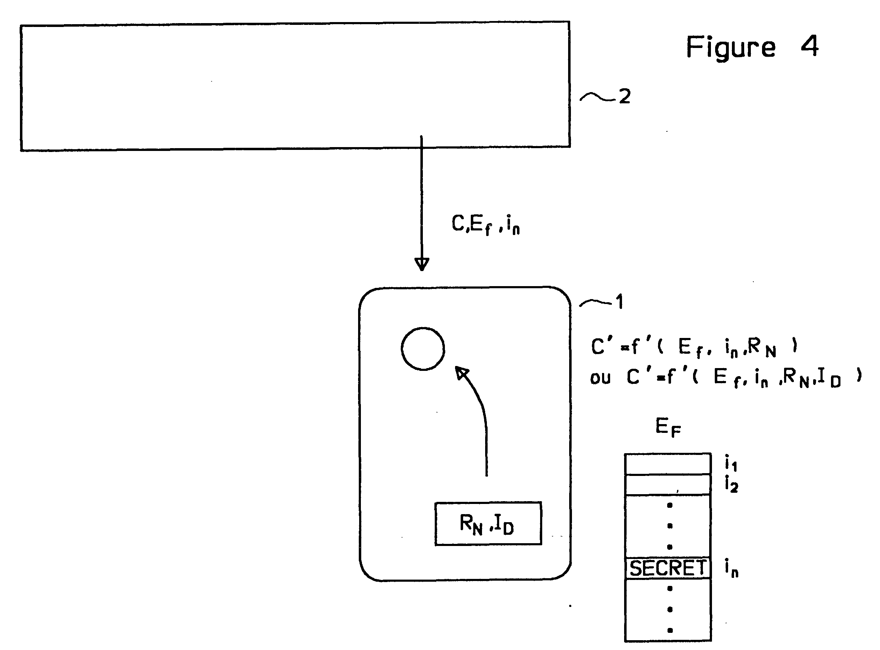

- La figure 4 montre le transfert de données entre la première carte et le système d'exploitation à l'instant de la réinsertion de la première carte.

Les figures montrent le transfert de données entre la première et une deuxième carte à puce et l'application ou système d'exploitation d'un terminal de cartes seront aptes à lire et/ou à écrire les cartes insérées dans le lecteur. La construction des éléments physiques du système (le lecteur, les cartes etc.) est conventionnelle et n'est pas montrée.

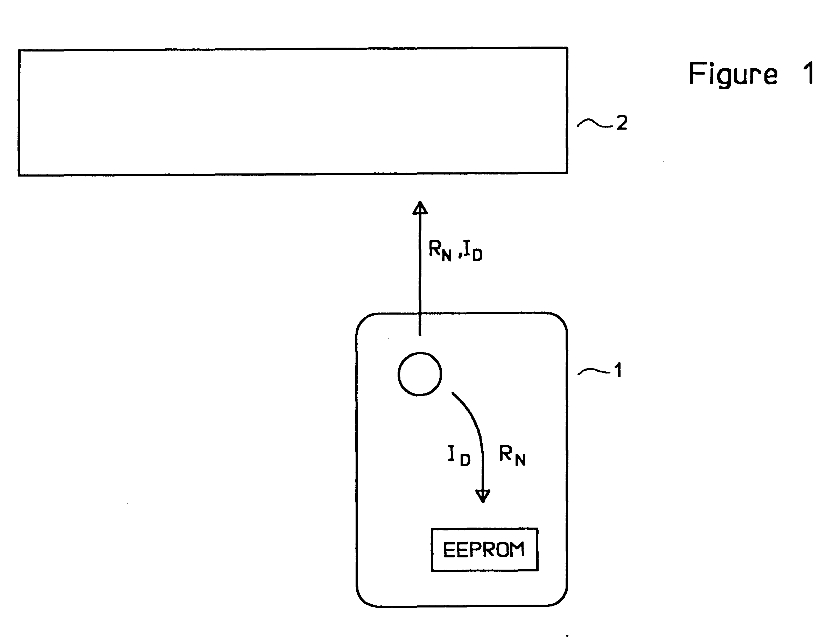

En se référant tout d'abord à la figure 1, les opérations qui sont effectuées à l'instant de la première insertion de la première carte 1 dans le lecteur d'un terminal sont montrées. A l'insertion de la carte, le microprocesseur de la carte 1 est mis sous tension par le lecteur, et le système d'exploitation 2 du terminal s'adresse au microprocesseur de la carte 1. En réponse, la carte envoie au terminal un numéro d'identification ID puis un nombre aléatoire R_{N} généré par le microprocesseur de la carte. Le numéro d'identification ID permet au système d'exploitation d'effectuer une authentification de la carte.

Le nombre aléatoire R_{N} généré par le microprocesseur est également gardé dans une zone de mémoire non-volatile électriquement effacable (EEPROM) de la carte. La mise en oeuvre d'une carte ayant une zone de mémoire EEPROM dans le circuit intégré fait partie des connaissances d'un homme de métier.

La carte 1 est alors retirée du lecteur et mise hors tension. Le nombre aléatoire sera retenu dans la mémoire EEPROM de la carte après son retrait du lecteur.

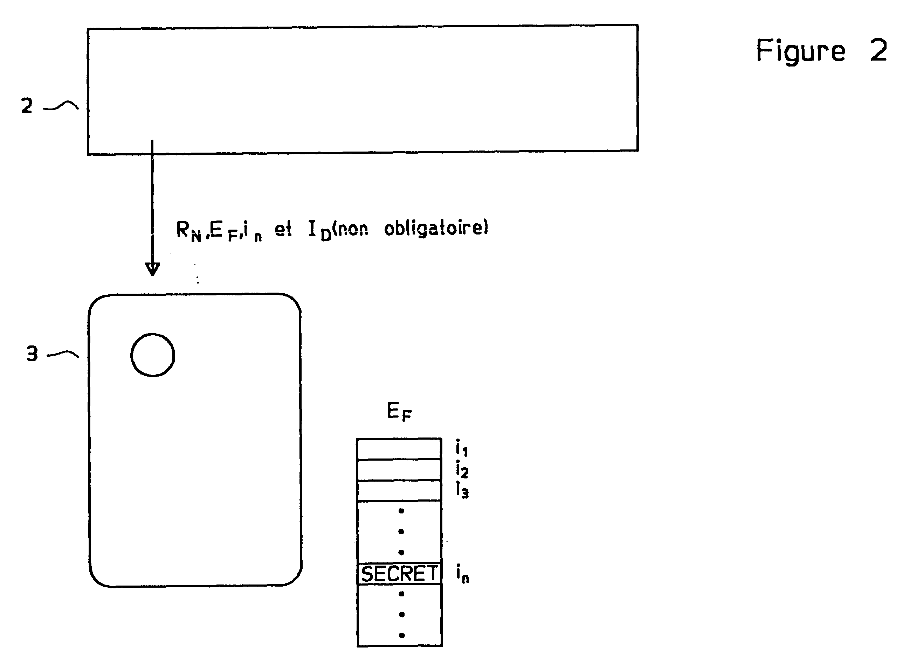

La figure 2 montre l'étape suivante dans laquelle la deuxième carte 3 du système est insérée dans le lecteur et le microprocesseur de la carte 3 est mis sous tension par le terminal. Le système d'exploitation 2 envoie à la carte le nombre aléatoire R_{N} généré par la première carte ainsi que des informations concernant le fichier E_{f} et un numéro d'identification in de la clé cryptographique qui sera utilisée dans l'étape suivante. Dans un mode de réalisation le numéro d'identification I_{D} peut être également envoyé.

Chacune des cartes 1, 3 est munie d'un algorithme de codage, par exemple, du type DES et qui comprend un jeu de clés i₁, i₂ ... iₙ stocké dans un ou plusieurs fichiers. La valeur de chacune de ces clés est secrète, mais le système d'exploitation peut sélectionner quelle clé sera utilisée dans l'étape de codage. La structure d'un fichier comprenant plusieurs clés est représentée à droite de la carte 3.

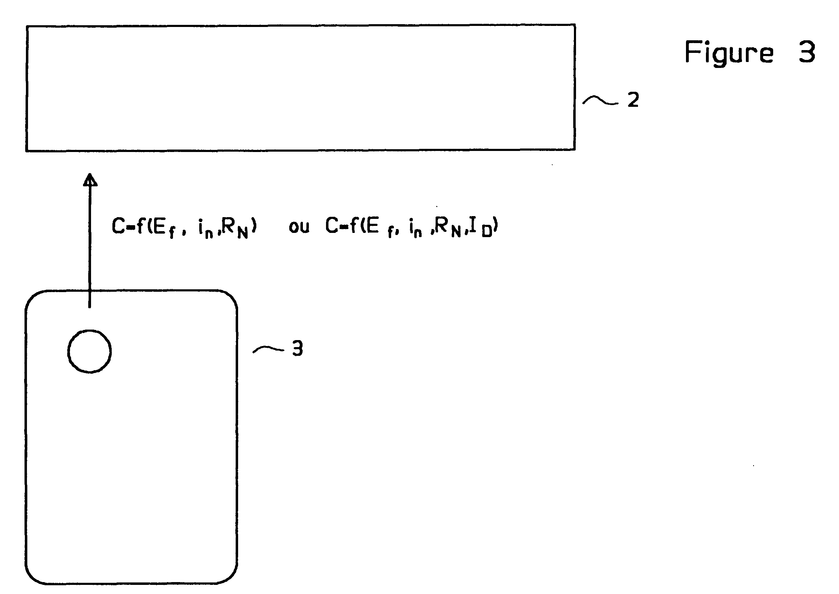

Lorsque le système d'exploitation a sélectionné un fichier E_{f} et une des clés iₙ, le microprocesseur de la deuxième carte, suivant les principes de l'algorithme de codage, élabore un code d'authentification C dépendant de la valeur du nombre aléatoire R_{N} ainsi que celle de la clé iₙ sélectionnée et, dans un mode de réalisation, le numéro d'identification I_{D}. Le code d'authentification C est alors envoyé au système d'exploitation et la carte est retirée du lecteur. Voir Figure 3.

Dans ce mode de réalisation, le fichier E_{f} et la clé iₙ sont sélectionnés par le système d'exploitation. Or, dans d'autres modes de réalisation, la deuxième ou la première carte peuvent déterminer le fichier et la clé qui seront utilisés. Dans ce cas, cette information sera transmise au système d'exploitation par la carte qui choisit leur valeurs et, par la suite, à l'autre carte. Dans le cas où la première carte sélectionne le contexte, les valeurs E_{f} et iₙ seront gardées dans la mémoire EEPROM avec le nombre aléatoire R_{N}.

Lorsque la deuxième carte a été retirée, la première carte peut être insérée à nouveau dans le lecteur. Le système d'exploitation envoie à la carte le code d'authentification C généré par la deuxième carte, ainsi que les informations concernant le fichier E_{f} et la clé cryptographique iₙ. Le nombre aléatoire R_{N} stocké dans la mémoire EEPROM est également réactivé par une instruction du système d'exploitation.

La carte 1 élabore un code d'authentification C' dépendant de la valeur du nombre aléatoire R_{N} ainsi que celle de la clé iₙ et compare ce code d'authentification avec le code C reçu du système d'exploitation. S'il y a corrélation entre les deux codes C, C' la carte 2 confirmera l'authentification du terminal et autorisera la lecture et/ou l'écriture des données stockées dans la carte.

Dans le cas où la première carte a sélectionné le contexte du codage, les valeurs E_{f} et iₙ seront déjà stockées dans la mémoire EEPROM et seulement le code d'authentification C sera envoyé à la première carte lors de son deuxième insertion.

Dans un autre mode de réalisation, l'information envoyée à la carte dans cette dernière étape (C, E_{f}, iₙ) peut inclure la valeur du nombre aléatoire R_{N} tenu par le système d'exploitation. La carte 1 peut la comparer avec la valeur du nombre aléatoire mémorisée dans sa mémoire EEPROM et peut refuser d'autoriser le terminal 2 dans le cas où les deux sont différentes. Cette comparaison peut s'effectuer même avant le calcul du code d'authentification C' par la carte et renforce la sécurité du système.

A la fin des opérations, le nombre aléatoire effacé de la mémoire EEPROM et la carte 1 est retirée du terminal.

## Revendications

1. Méthode d'authentification pour un terminal apte à gérer des échanges de données entre au moins deux cartes à puce et comprenant un coupleur monofente, et dans laquelle : la première carte est insérée dans le coupleur et génère un nombre aléatoire R_{N} qui est à la fois envoyé au système d'exploitation du terminal et stocké dans une mémoire non-volatile programmable de la carte; la première carte est retirée et une deuxième carte insérée pour recevoir le nombre aléatoire R_{N} et pour générer un code d'authentification C qui est envoyé au système d'exploitation du terminal; la deuxième carte est retirée et la première carte réinsérée, le nombre aléatoire étant réactivé dans la mémoire non-volatile et la première carte élaborant à partir de ce numéro un code d'authentification C' pour vérifier le code d'authentification C envoyé par la deuxième carte pour permettre ou empêcher l'accès par le système aux données stockées dans la carte.

2. Méthode d'authentification selon la revendication 1 et dans laquelle le nombre aléatoire R_{N} est tenu dans une mémoire non-volatile électriquement effacable de la première carte.

3. Méthode d'authentification selon la revendication 1 ou 2 dans laquelle la première carte envoie un numéro d'identification au système d'exploitation lors de sa première insertion pour que le système d'exploitation puisse vérifier l'identité de la première carte.

4. Méthode d'authentification selon l'une quelconque des revendications 1 à 3 et dans laquelle l'élaboration des codes d'authentification C, C' par chacune des cartes s'effectue en utilisant un algorithme cryptographique qui calcule le code d'authentification dépendant de la valeur du nombre aléatoire et la valeur d'une ou plusieurs clés cryptographiques connues par chacune des cartes.

5. Méthode d'authentification selon les revendications 3 et 4 dans laquelle l'algorithme cryptographique calcule le code d'authentification dépendant de la valeur du numéro d'authentification ainsi que la valeur du nombre aléatoire et la valeur d'une ou plusieurs clés cryptographiques.

6. Méthode d'authentification selon la revendication 4 ou 5 et dans laquelle le système d'exploitation choisit la clé qui est utilisée dans l'élaboration des codes d'authentification C, C' et communique cette information à chacune des cartes.

7. Méthode d'authentification selon la revendication 4 ou 5 dans laquelle la première carte choisit la clé qui est utilisée dans l'élaboration des codes d'authentification C, C', cette information étant tenue dans sa mémoire non-volatile et réactivée lors de sa deuxième insertion.

8. Méthode d'authentification selon l'une quelconque des revendications 1 à 7 et dans laquelle le nombre aléatoire RN est effacé de la mémoire non-volatile après avoir été utilisé dans l'élaboration du code d'authentification C' par la première carte.

9. Méthode d'authentification selon l'une quelconque des revendications 1 à 8 et dans laquelle le nombre aléatoire est retransmis à la première carte par le système d'exploitation à l'instant de l'envoi du code d'authentification C élaboré par la deuxième carte, pour que la première carte puisse le comparer avec celui tenu dans sa mémoire non-volatile afin d'effectuer une authentification supplémentaire.

## Patentansprüche

1. Authentifizierungsmethode für ein Terminal, das geeignet ist, den Austausch von Daten zwischen wenigstens zwei Chipkarten zu verwalten, und umfassend eine Einschlitz-Steuereinheit, und in der: die erste Karte in die Steuereinheit eingeführt wird und eine Zufallsnummer R_{N} generiert, die gleichzeitig an das Betriebssystem des Terminals gesendet und in einem programmierbaren nichtflüchtigen Speicher der Karte gespeichert wird; die erste Karte wird herausgenommen und eine zweite Karte eingeführt, um die Zufallsnummer R_{N} aufzunehmen und um einen Authentifizierungscode C zu generieren, der an das Betriebssystem des Terminals gesendet wird; die zweite Karte wird herausgenommen und die erste Karte erneut eingeführt, wobei die Zufallsnummer im nichtflüchtigen Speicher reaktiviert wird und die erste Karte ausgehend von dieser Nummer einen Authentifizierungscode C erarbeitet, um den von der zweiten Karte gesendeten Authentifizierungscode C' zu überprüfen, um den Zugang durch das System zu den auf der Karte gespeicherten Daten zu erlauben oder zu verhindern.

2. Authentifizierungsmethode gemäß Anspruch 1 und in der die Zufallsnummer R_{N} in einem nichtflüchtigen Speicher gehalten wird, der von der ersten Karte elektronisch gelöscht werden kann.

3. Authentifizierungsmethode gemäß Anspruch 1 oder 2, in der die erste Karte bei ihrem ersten Einführen eine Identifizierungsnummer an das Betriebssystem sendet, damit das Betriebssystem die Identität der ersten Karte überprüfen kann.

4. Authentifizierungsmethode gemäß Anspruch 1 oder 3 und in der die Erarbeitung der Authentifizierungscodes C, C' durch jede der Karten durch Verwendung eines chiffrierten Algorithmus erfolgt, der den vom Wert der Zufallsnummer abhängigen Authentifizierungscode und den Wert einer oder mehrerer jeder der Karten bekannten chiffrierten Schlüssels berechnet.

5. Authentifizierungsmethode gemäß Anspruch 3 oder 4, in der der chiffrierte Algorithmus den vom Wert der Authentifizierungsnummer abhängigen Authentifizierungscode sowie den Wert der Zufallsnummer und den Wert einer oder mehrerer chiffrierter Schlüssel berechnet.

6. Authentifizierungsmethode gemäß Anspruch 4 oder 5, und in der das Betriebssystem den Schlüssel auswählt, der bei der Erarbeitung der Authentifizierungscodes C, C' verwendet wird und diese Information jeder der Karten kommuniziert.

7. Authentifizierungsmethode gemäß Anspruch 4 oder 5, in der die erste Karte den Schlüssel auswählt, der bei der Erarbeitung der Authentifizierungscodes C, C' verwendet wird, wobei diese Information in ihrem nichtflüchtigen Speicher gehalten und bei ihrem zweiten Einführen reaktiviert wird.

8. Authentifizierungsmethode gemäß Anspruch 1 bis 7, und in der die Zufallsnummer R_{N} vom nichtflüchtigen Speicher gelöscht wird, nachdem sie bei der Erarbeitung des Authentifizierungscodes C' durch die erste Karte verwendet worden ist.

9. Authentifizierungsmethode gemäß Anspruch 1 bis 8, und in der die Zufallsnummer durch das Betriebssystem im Augenblick des Versendens des von der zweiten Karte erarbeiteten Authentifizierungscodes C zur ersten Karte zurückübertragen wird, damit die erste Karte sie mit der in ihrem nichtflüchtigen Speicher gehaltenen vergleichen kann, um eine zusätzliche Authentifizierung durchzuführen.

## Claims

1. An authentication method for a terminal suitable for managing data interchanges between at least two smart cards and comprising a single slot coupler, in which method: the first card is inserted into the coupler and generates a random number R_{N} which is both sent to the operating system of the terminal and stored in a programmable non-volatile memory of the card; the first card is withdrawn and a second card is inserted to receive the random number R_{N} and to generate an authentication code C which is sent to the operating system of the terminal; the second card is withdrawn and the first card is reinserted, the random number being reactivated in the non-volatile memory and the first card using this number to generate an authentication code C' to verify the authentication code C sent by the second card so as to allow or prevent access by the system to data stored in the card.

2. An authentication method according to claim 1, in which the random number R_{N} is held in an electrically erasable non-volatile memory of the first card.

3. An authentication method according to claim 1 or 2, in which the first card sends an identity number to the operating system on first insertion so that the operating system can verify the identify of the first card.

4. An authentication method according to any one of claims 1 to 3, in which the authentication codes C and C' are generated by each of the cards by using a cryptographic algorithm which computes the authentication code depending on the value of the random number and the value of one or more cryptographic keys known to each of the cards.

5. An authentication method according to claims 3 and 4, in which the cryptographic algorithm computes the authentication code depending on the value of the authentication number and on the value of the random number and the value of one or more cryptographic keys.

6. An authentication method according to claim 4 or 5, in which the operating system selects the key for use in generating the authentication codes C, C' and communicates this information to each of the cards.

7. An authentication method according to claim 4 or 5, in which the first card selects the key which is used in generating the authentication codes C and C', this information being held in its non-volatile memory and being reactivated on its second insertion.

8. An authentication method according to any one of claims 1 to 7, in which the random number R_{N} is erased from the non-volatile memory after being used by the first card to generate the authentication code C'.

9. An authentication method according to any one of claims 1 to 8, in which the random number is retransmitted to the first card by the operating system at the same time as the authentication code C generated by the second card is sent so that the first card can compare it with the code contained in its own non-volatile memory in order to perform additional authentication.
